(19) Europäisches Patentamt
European Patent Office
Office européen des brevets

(11) Veröffentlichungsnummer : **0 264 435 B1**

(12) # EUROPÄISCHE PATENTSCHRIFT

(45) Veröffentlichungstag der Patentschrift : **04.03.92 Patentblatt 92/10**

(51) Int. Cl.$^5$ : **C09K 19/30**, C09K 19/34, C09K 19/20

(21) Anmeldenummer : **87903284.5**

(22) Anmeldetag : **22.04.87**

(86) Internationale Anmeldenummer : **PCT/EP87/00218**

(87) Internationale Veröffentlichungsnummer : **WO 87/06602 05.11.87 Gazette 87/24**

(54) **SMEKTISCHE FLÜSSIGKRISTALLINE PHASEN.**

Die Akte enthält technische Angaben, die nach dem Eingang der Anmeldung eingereicht wurden und die nicht in dieser Patentschrift enthalten sind.

(30) Priorität : **02.05.86 DE 3614778**

(43) Veröffentlichungstag der Anmeldung : **27.04.88 Patentblatt 88/17**

(45) Bekanntmachung des Hinweises auf die Patenterteilung : **04.03.92 Patentblatt 92/10**

(84) Benannte Vertragsstaaten : **CH DE FR GB IT LI NL**

(56) Entgegenhaltungen :
**EP-A- 0 022 183**
**EP-A- 0 193 191**
**WO-A-87/01717**
**DE-A- 3 533 333**
**DE-A- 3 608 500**
**GB-A- 2 044 767**
**GB-A- 2 162 515**
**Kontakte (Darmstadt) 1989(1), S. 34-48**

(73) Patentinhaber : **MERCK PATENT GESELLSCHAFT MIT BESCHRÄNKTER HAFTUNG**
**Frankfurter Strasse 250 Postfach 4119**
**W-6100 Darmstadt (DE)**

(72) Erfinder : **REIFFENRATH, Volker**
**Pfungstädter Str. 31**
**W-6100 Darmstadt (DE)**
Erfinder : **KRAUSE, Joachim**
**Samuel-Morse-Str. 14**
**W-6110 Dieburg (DE)**
Erfinder : **GEELHAAR, Thomas**
**Trajanstr. 12**
**W-6500 Mainz (DE)**
Erfinder : **EIDENSCHINK, Rudolf**
**Konrad-Adenauer-Strasse 1**
**W-6109 Mühltal 1 (DE)**
Erfinder : **KURMEIER, Hans-Adolf**
**Hinter der Schule 3a**
**W-6104 Seeheim-Jugenheim (DE)**
Erfinder : **POETSCH, Eike**
**Am Buchwald 4**
**W-6109 Mühltal 6 (DE)**
Erfinder : **SCHEUBLE, Bernhard Bluff 100**
**100-1 Yamate-cho**
**Naka-ku Yokohama-shi**
**Kanagawa 231 (JP)**
Erfinder : **WEBER, Georg**
**Wilhelm-Leuschner-Str. 38**
**W-6106 Erzhausen (DE)**

EP 0 264 435 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von Trifluortoluol-derivaten der Formel I,

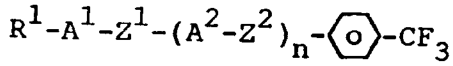

worin $R^1$ Alkyl mit 1 bis 12 C-Atomen, worin auch eine oder mehrere nicht benachbarte $CH_2$-Gruppen durch -O-, -CO-, -O-CO-, -CO-O-, -O-CO-O-, -CH-Halogen-, -CH-CN- und/oder -CH=CH- ersetzt sein können,

$A^1$ und $A^2$ jeweils unabhängig voneinander unsubstituiertes oder ein- oder mehrfach durch Halogen, Nitril und/oder $CH_3$ substituiertes 1,4-Phenylen, worin auch eine oder mehrere CH-Gruppen durch N ersetzt sein können, trans-1,4-Cyclohexylen, worin auch eine oder zwei nicht benachbarte $CH_2$-Gruppen durch -O- und/oder -S- ersetzt sein können, oder 1,4-Bicyclo(2,2,2)octylen,

$Z^1$ und $Z^2$ jeweils unabhängig voneinander -CO-O-, -O-CO-, $-CH_2O-$, $-OCH_2-$, $-CH_2CH_2-$ oder eine Einfachbindung und

n O oder 1

bedeutet, als Komponenten chirale getilteter smektischer Phasen, sowie smektische flüssigkristalline Phasen, insbesondere chirale getiltete smektische Phasen, enthaltend Verbindungen der Formel I. Die Erfindung betrifft ferner neue Trifluortoluol-derivate der Formel II, (siche Anspruch 2).

Chirale getiltete smektische flüssigkristalline Phasen mit ferroelektrischen Eigenschaften können hergestellt werden, indem man Basis-Mischungen mit einer oder mehreren getilteten smektischen Phasen mit einem geeigneten chiralen Dotierstoff versetzt (L.A. Beresnev et al., Mol. Cryst. Liq. Cryst. 89, 327 (1982); H.R. Brand et al., J. Physique 44, (lett.), L-771 (1983)). Solche Phasen können als Dielektrika für schnell schaltende Displays verwendet werden, die auf dem von Clark und Lagerwall beschriebenen Prinzip der SSFLC-Technologie (N.A. Clark und S.T. Lagerwall, Appl. Phys. Lett. 36, 899 (1980); USP 4,367,924) auf der Basis der ferroelektrischen Eigenschaften der chiral getilteten Phase beruhen. In dieser Phase sind die langgestreckten Moleküle in Schichten angeordnet, wobei die Moleküle einen Tiltwinkel zur Schichtennormalen aufweisen. Beim Fortschreiten von Schicht zu Schicht ändert sich die Tiltrichtung um einen kleinen Winkel bezüglich einer senkrecht zu den Schichten stehenden Achse, so daß eine Helixstruktur ausgebildet wird. In Displays, die auf dem Prinzip der SSFLC-Technologie beruhen, sind die smektischen Schichten senkrecht zu den Platten der Zelle angeordnet. Die helixartige Anordnung der Tiltrichtungen der Moleküle wird durch einen sehr geringen Abstand der Platten (ca. 1-2 μm) unterdrückt. Dadurch werden die Längsachsen der Moleküle gezwungen, sich in einer Ebene parallel zu den Platten der Zelle anzuordnen, wodurch zwei ausgezeichnete Tiltorientierungen entstehen. Durch Anlegen eines geeigneten elektrischen Wechselfeldes kann in der eine spontane Polarisation aufweisenden flüssigkristallinen Phase zwischen diesen beiden Zuständen hin- und hergeschaltet werden. Dieser Schaltvorgang ist wesentlich schneller als bei herkömmlichen verdrillten Zellen (TN-LCD's), die auf nematischen Flüssigkristallen basieren.

Ein großer Nachteil für viele Anwendungen der derzeit verfügbaren Materialien mit chirale getilteten smektischen Phasen (wie z.B. Sc*) ist, daß die für die gute Orientierbarkeit im Display erforderliche $S_A$-Phase oberhalb der Sc*-Phase oft nicht oder nicht im gewünschten Temperaturbereich auftritt.

Aus der EP-A-0 022 183 ist bekannt, daß 4-(trans-4-Alkylcyclohexyl)-4'-trifluormethylbiphenyle als Komponenten nematischer flüssigkristalliner Materialien verwendet werden können. Aufgrund ihrer engen Mesophasenbereiche sind sie jedoch weniger geeignet als die Cyclohexanderivate der Formel II.

In der EP-A-0 193 191 werden ähnliche Verbindungen beschrieben, welche jedoch eine Pyrimidin-2,5-diylgruppe aufweisen.

In keinem der beiden Dokumente findet sich ein Hinweis, daß diese oder ähnliche Verbindungen auch als Komponenten chiraler getilteter smektischer Phasen verwendet werden können.

Es wurde nun gefunden, daß die Verwendung von Verbindungen der Formel I als Komponenten chirale getilteter smektischer Mischungen die erwähnten Nachteile wesentlich vermindern kann. Die Verbindungen der Formel I sind somit als Komponenten chiral getilteter smektischer flüssigkristalliner Phasen vorzüglich geeignet. Insbesondere sind mit ihrer Hilfe chemisch besonders stabile chiral getiltete smektische flüssigkristalline Phasen mit günstigen ferroelektrischen Phasenbereichen, insbesondere mit breiten Sc* Phasenbereichen, und für die Orientierung im Display günstigen $S_A$-Phasen oberhalb der Sc-Phase, günstiger Pitchhöhe und für derartige Phasen hohen Werten für die spontane Polarisation herstellbar. P ist die spontane Polarisation in $nC/cm^2$.

Gegenstand der Erfindung ist somit die Verwendung der Verbindungen der Formel I als Komponenten (chiral getilteter) smektischer flüssigkristalliner Phasen. Gegenstand der Erfindung sind ferner smektische flüssigkristalline Phasen, insbesondere chirale getiltete smektische Phasen, mit einem Gehalt an mindestens einer

Verbindung der Formel I sowie Flüssigkristallanzeigeelemente, insbesondere elektrooptische Anzeigeelemente, die derartige Phasen enthalten.

Gegenstand der Erfindung sind ferner die Cyclohexanderivate der Formel II.

Die Verbindungen der Formel I können geradkettige oder verzweigte Flügelgruppen $R^1$ haben. Verbindungen mit verzweigten Flügelgruppen können in Form des Racemates oder als optisch aktive Verbindungen eingesetzt werden. Achirale Basismischungen aus Verbindungen der Formel I und gegebenenfalls weiteren achiralen Komponenten können mit chiralen Verbindungen der Formel I oder auch mit anderen chiralen Verbindungen dotiert werden, um chirale getiltete smektische Phasen zu erhalten.

Die Verbindungen der Formel I umfassen insbesondere Verbindungen der Teilformeln Ia bis Id:

$R^1$-$A^1$-Phe-$CF_3$ Ia

$R^1$-$A^1$-$Z^1$-Phe-$CF_3$ Ib

$R^1$-$A^1$-$A^2$-$Z^2$-Phe-$CF_3$ Ic

$R^1$-$A^1$-$A^2$-Phe-$CF_3$ Id

Darunter sind diejenigen der Teilformel Ib und besonders bevorzugt (Phe bedeutet 1,4-Phenylen).

In den Verbindungen der vor- und nachstehenden Formeln bedeutet $R^1$ vorzugsweise R-, R-O-, R-O-CO-, R-O-COO- oder R-CO-O-. R ist vorzugsweise eine geradkettige Alkylgruppe mit vorzugsweise 5 bis 12 C-Atomen, worin auch eine oder zwei nicht endständige $CH_2$-Gruppen durch -O-, -O-CO-, -$CHCH_3$-, -CHCN-, -CH-Halogen, -$CHCH_3$-O- und/oder -CH=CH- ersetzt sein können. R bedeutet beispielsweise bevorzugt Pentyl, Hexyl, Heptyl, Octyl, Nonyl, Decyl, Undecyl oder Dodecyl, ferner Methyl, Ethyl, Propyl, Butyl, 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl, 1,3-Dioxabutyl (= Methoxymethoxy), 1,3-, 1,4- oder 2,4-Dioxapentyl, 1,3-, 1,4-, 1,5-, 2,4-, 2,5- oder 3,5-Dioxahexyl, 1,3-, 1,4-, 1,5-, 1,6-, 2,4-, 2,5-, 2,6-, 3,5-, 3,6- oder 4,6-Dioxaheptyl, 1,4-Dioxaoctyl, 1,4,7-Trioxaoctyl, 1,4-Dioxanonyl, 1,4-Dioxadecyl.

Verbindungen der Formel I sowie der vor- und nachstehenden Teilformeln mit verzweigter Flügelgruppe $R^1$ können gelegentlich wegen einer besseren Löslichkeit in den üblichen flüssigkristallinen Basismaterialien von Bedeutung sein, insbesondere aber als chirale Dotierstoffe für chiral getiltete smektische Phasen, wenn sie optisch aktiv sind. Solche Verbindungen eignen sich jedoch auch als Komponenten nematischer flüssigkristalliner Phasen, insbesondere zur Vermeidung von reverse twist. Verzweigte Gruppen dieser Art enthalten in der Regel eine oder zwei Kettenverzweigungen. Vorzugsweise ist das asymmetrische Kohlenstoffatom mit zwei unterschiedlich substituierten C-Atomen, einem H-Atom und einem Substituenten ausgewählt aus der Gruppe Halogen (insbesondere F, Cl oder Br), Alkyl oder Alkoxy mit jeweils 1 bis 5 C-Atomen und CN verknüpft. Der optisch aktive organische Rest $R^1$ bzw. $R^2$ hat vorzugsweise die Formel,

$$\text{-X-Q-}\overset{*}{\underset{\underset{\displaystyle Y}{|}}{\text{CH}}}\text{-R}$$

worin

X -CO-O-, -O-CO-, -O-CO-O-, -CO-, -O-, -S-, -CH=CH-, -CH=CH-COO- oder eine Einfachbindung,

Q Alkylen mit 1 bis 5 C-Atomen, worin auch eine nicht mit X verknüpfte $CH_2$-Gruppe durch -O-, -CO-, -O-CO-, -CO-O- oder -CH=CH- ersetzt sein kann, oder eine Einfachbindung,

Y CN, Halogen, Methyl oder Methoxy, und

R eine von Y verschiedene Alkylgruppe mit 1 bis 18 C-Atomen, worin auch eine oder zwei nicht benachbarte $CH_2$-Gruppen durch -O-, -CO-, -O-CO-, -CO-O- und/oder -CH=CH- ersetzt sein können, bedeutet.

X ist vorzugsweise -O-, -CO-O-, -O-CO-, -CH=CH-COO- (trans) oder eine Einfachbindung. Besonders bevorzugt sind -O-, -CO-O- und -O-CO-.

Q ist vorzugsweise -$CH_2$-, -$CH_2CH_2$- oder eine Einfachbindung, insbesondere bevorzugt eine Einfachbindung.

Y ist vorzugsweise $CH_3$, -CN oder Cl, insbesondere bevorzugt -CN.

R ist vorzugsweise geradkettiges Alkyl mit 1 bis 10, insbesondere mit 1 bis 7, C-Atomen, worin gegebenenfalls eine $CH_2$-Gruppe durch -O-, -O-CO- oder -CO-O- ersetzt sein kann.

Bevorzugte verzweigte Reste sind Isopropyl, 2-Butyl (= 1-Methylpropyl), Isobutyl (= 2-Methylpropyl, Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, 2-Octyl, 3,7-Dimethyloctyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy, 2-Oxa-3-methylbutyl, 3-Oxa-4-methylpentyl, 2-Octyloxy, 3,7-Dimethyloctyloxy, 2-Chlorpropionyloxy, 2-Chlor-3-methylbutyryloxy, 2-Chlor-4-methylvaleryloxy, 2-Chlor-3-methylvaleryloxy, 2-Methyl-3-oxa-pentyl, 2-Methyl-3-oxa-hexyl.

Im Falle n = 1 bedeutet vorzugsweise eine der Gruppen $Z^1$ und $Z^2$ eine Einfachbindung. $A^1$ und $A^2$ sind vorzugsweise 1,4-Phenylen, trans-1,4-Cyclohexylen oder Pyrimidin-2,5-diyl. Die Verbindungen der Formel I enthalten vorzugsweise nicht mehr als eine 1,4-Phenylengruppe, worin eine oder mehrere CH-Gruppen durch N ersetzt sind.

Unter den Verbindungen der Formel I sowie der vor- und nachstehenden Teilformeln sind diejenigen bevorzugt, in denen mindestens einer der darin enthaltenen Reste eine der angegebenen bevorzugten Bedeutungen hat.

Die Verbindungen der Formel I werden nach an sich bekannten Methoden hergestellt, wie sie in der Literatur (z. B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Ausgangsstoffe können gewünschtenfalls auch in situ gebildet werden, derart, daß man sie aus dem Reaktionsgemisch nicht isoliert, sondern sofort weiter zu den Verbindungen der Formel I umsetzt.

Die Verbindungen der Formel I sind teilweise bekannt (z. B. DE-A-29 37 911, DD-A-144 409) und teilweise neu.

Ferner bevorzugt sind die neuen Cyclohexanderivate der Formel II

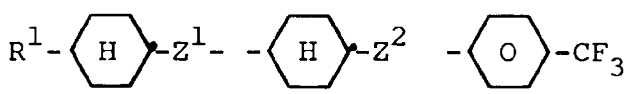

II

worin

$R^1$ alkyl mit 1 bis 12 C-Atomen, worin auch eine oder mehrere nicht benachbarte $CH_2$-Gruppen durch -O-, -CO-, -O-CO-, -CO-O-, -O-CO-O-, -CH-Halogen-, -CH-CN- und/oder -CH=CH- ersetzt sein können,

$Z^1$ und $Z^2$ jeweils unabhängig voneinander -CO-O-, -O-CO-, $-CH_2O-$, $-OCH_2-$ oder $-CH_2CH_2$, eine der Gruppen $Z^1$ und $Z^2$ auch eine Einfachbindung,

bedeutet, mit der Maßgabe, daß im Falle $Z^1$ = Einfachbindung $Z^2$ -CO-O-, $-CH_2O-$, $-OCH_2-$ oder $-CH_2CH_2$ bedeutet.

$R^1$ ist hier vorzugsweise geradkettiges Alkyl mit 2 bis 7 C-Atomen. Vorzugsweise IIb, IIc und IIf eine der Gruppen $Z^1$ und $Z^2$ eine Einfachbindung und die andere Gruppe $Z^1$ oder $Z^2$ ist $-CH_2CH_2-$ oder -COO-, vorzugsweise $-CH_2CH_2-$. Besonders bevorzugt sind die Verbindungen der Teilformeln:

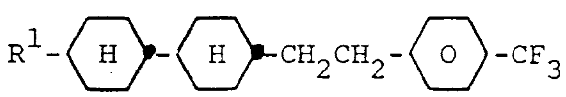

IIb

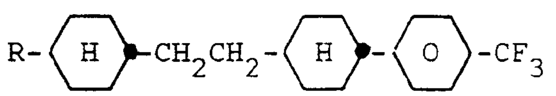

IIc

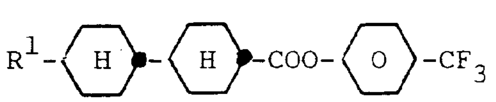

IIf

Die Verbindungen der Formel II eignen sich nicht nur als Dotierstoffe für ferroelektrische flüssigkristalline Phasen, sondern sind insbesondere auch vorzügliche Komponenten nematischer flüssigkristalliner Phasen.

Die erfindungsgemäßen nematischen flüssigkristallinen Phasen sind ebenfalls Gegenstand der Erfindung und bestehen aus 2 bis 15, vorzugsweise 3 bis 12 Komponenten, darunter mindestens einer Verbindung der Formel II. Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexancarbonsäurephenyl- oder cyclohexylester, Phenylcyclohexane, Phenylbicyclohexane, Cyclohexylbiphenyle, Cyclohexylcyclohexane, Cyclohexylnaphthaline, 1,4-Bis-cyclohexylbenzole, 4,4'-Bis-cyclohexylbiphenyle, Phenyl- oder Cyclohexylpyrimidine, Phenyl- oder Cyclohexyldioxane, Phenyl- oder Cyclohexyl-1,3-dithiane, 1-Phenyl-2-cyclohexylethane, gegebenenfalls hologenierten Stilbene, Benzylphenylether, Tolane und substituierten Zimtsäuren.

Die wichtigsten als Bestandteile derartiger flüssigkristalliner Phasen in Frage kommenden Verbindungen lassen sich durch die Formel II′ charakterisieren,

R′-L-G-E-R″    II′

worin L und E je ein carbo- oder heterocyclisches Ringsystem aus der aus 1,4-disubstituierten Benzol und Cyclohexanringen, 4,4′-disubstituierten Biphenyl-, Phenylcyclohexan- und Cyclohexylcyclohexansystemen, 2,5-disubstituierten Pyrimidin- und 1,3-Dioxanringen, 2,6-disubstituiertem Naphthalin, Di- und Tetrahydronaphthalin, Chinazolin und Tetrahydrochinazolin gebildeten Gruppe,

G

| | |
|---|---|
| -CH=CH- | -N(O)=N- |
| -CH=CY- | -CH=N(O)- |
| -C≡C- | $-CH_2-CH_2-$ |
| -CO-O- | $-CH_2-O-$ |
| -CO-S- | $-CH_2-S-$ |
| -CH=N- | -COO-Phe-COO- |

oder eine C-C-Einfachbindung, Y Halogen, vorzugsweise Chlor, oder CN, und R′ und R″ Alkyl, Alkenyl, Alkoxy, Oxaalkyl, Alkanoyloxy oder Alkoxycarbonyloxy mit bis zu 18, vorzugsweise bis zu 8 Kohlenstoffatomen, oder einer dieser Reste auch CN, NC, NCS, $NO_2$, $CH_3$, F, Cl oder Br bedeuten.

Bei den meisten dieser Verbindungen sind R′ und R″ voneinander verschieden, wobei einer dieser Reste meist eine Alkyl- oder Alkoxygruppe ist. Aber auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Die erfindungsgemäßen Phasen enthalten etwa 0,1 bis 99, vorzugsweise 10 bis 95 %, einer oder mehrerer Verbindungen der Formel II.

Diese nematischen Phasen zeichnen sich durch günstige Phasenbereiche, niedrige Viskosität, niedrige optische Anisotropie und günstige Schwellenspannungen aus.

Die erfindungsgemäßen chiralen getilteten smektischen Phasen enthalten vorzugsweise mindestens zwei, insbesondere mindestens drei Verbindungen. Besonders bevorzugt sind erfindungsgemäße chiral getiltete smektische flüssigkristalline Phasen, deren achirale Basismischung neben mindestens einer Verbindung der Formel I mindestens eine andere Komponente mit negativer oder betragsmäßig kleiner positiver dielektrischer Anisotropie enthält. Diese weiteren Komponente(n) der chiralen Basismischung können 1 bis 50 %, vorzugsweise 10 bis 25 %, der Basismischung ausmachen. Als weitere Komponenten mit betragsmäßig kleiner positiver oder negativer dielektrischer Anisotropie eignen sich Verbindungen der Teilformeln Va bis Vp:

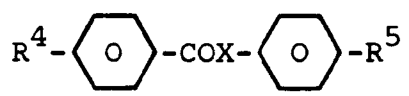
Va

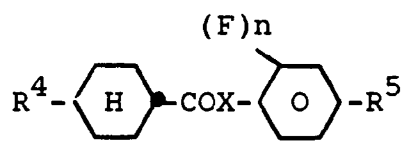
Vb

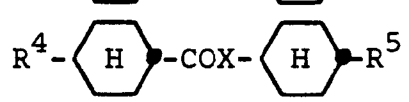
Vc

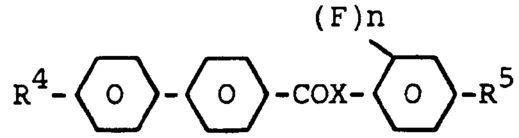
Vd

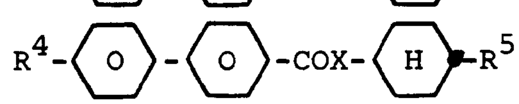
Ve

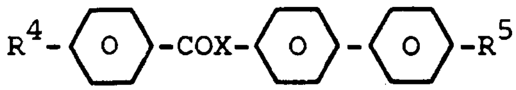

Vf

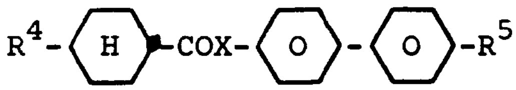

Vg

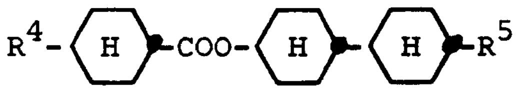

Vh

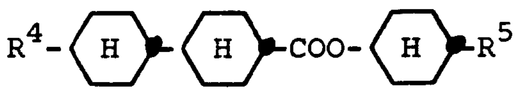

Vi

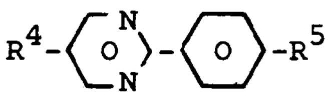

Vj

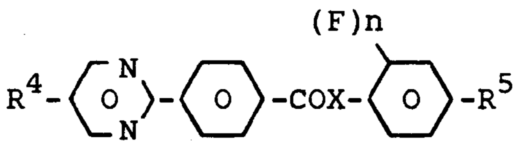

Vk

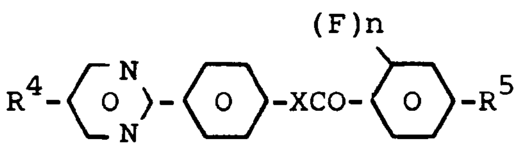

Vl

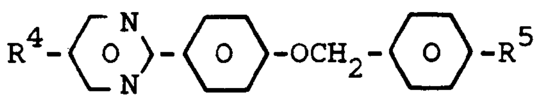

Vm

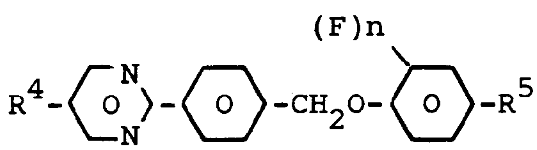

Vn

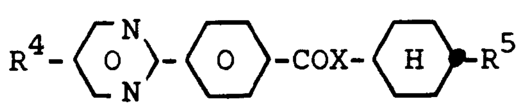

Vo

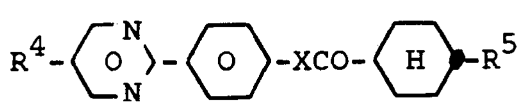

Vp

$R^4$ und $R^5$ sind jeweils vorzugsweise geradkettiges Alkyl, Alkoxy, Alkanoyloxy oder Alkoxycarbonyl mit jeweils 3 bis 12 C-Atomen. X ist vorzugsweise O. n ist 0 oder 1.

Besonders bevorzugt sind die Verbindungen der Teilformeln Va, Vb, Vd und Vf, worin $R^4$ und $R^5$ jeweils geradkettiges Alkyl oder Alkoxy mit jeweils 5 bis 10 C-Atomen bedeutet.

Die Verbindungen der Teilformeln Vc, Vh und Vi eignen sich als Zusätze zur Schmelzpunkterniedrigung und werden normalerweise den Basismischungen mit nicht mehr als 5 %, vorzugsweise 1 bis 3 %, zugesetzt.

$R^4$ und $R^5$ bedeuten in den Verbindungen der Teilformeln Vc, Vh und Vi vorzugsweise geradkettiges Alkyl mit 2 bis 7, vorzugsweise 3 bis 5, C-Atomen. Eine weitere zur Schmelzpunktserniedrigung in den erfindungsgemäßen Phasen geeignete Verbindungsklasse ist diejenige der Formel

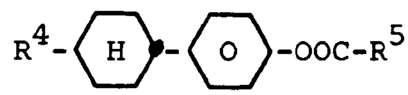

worin $R^4$ und $R^5$ die für Vc, Vh und Vi angegebene bevorzugte Bedeutung haben.

Als weitere Komponenten mit negativer dielektrischer Anisotropie eignen sich weiterhin Verbindungen enthaltend das Strukturelement B oder C.

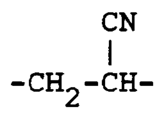

B

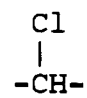

C

Bevorzugte Verbindungen dieser Art entsprechen den Formeln VIb und VIc:

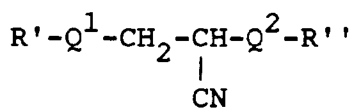

VIb

R′-Q³-Q⁴-R‴ (VIc)

R′ und R″ bedeuten jeweils vorzugsweise geradkettige Alkyl- oder Alkoxy-Gruppen mit jeweils 2 bis 10 C-Atomen. $Q^1$ und $Q^2$ bedeuten jeweils 1,4-Phenylen, trans-1,4-Cyclohexylen, 4,4′-Biphenylyl, 4-(trans-4-Cyclohexyl)-phenyl, trans,trans-4,4′-Bicyclohexyl oder eine der Gruppen $Q^1$ und $Q^2$ auch eine Einfachbindung.

$Q^3$ und $Q^4$ bedeuten jeweils 1,4-Phenylen, 4,4′-Biphenylyl oder trans-1,4-Cyclohexylen. Eine der Gruppen $Q^3$ und $Q^4$ kann auch 1,4-Phenylen bedeuten, worin mindestens eine CH-Gruppe durch N ersetzt ist. R‴ ist ein optisch aktiver Rest mit einem asymmetrischen Kohlenstoffatom der Struktur

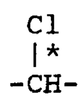, 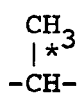 oder 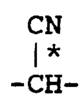.

Besonders bevorzugte Verbindungen der Formel VIc sind diejenigen der Formel VIc′:

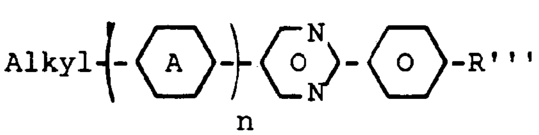

VIc'

worin A 1,4-Phenylen oder trans-1,4-Cyclohexylen und n 0 oder 1 bedeutet.

Die Herstellung der erfindungsgemäßen Phasen erfolgt in an sich üblicher Weise. In der Regel werden die Komponenten ineinander gelöst, zweckmäßig bei erhöhter Temperatur.

Durch geeignete Zusätze können die flüssigkristallinen Phasen nach der Erfindung so modifiziert werden, daß sie in allen bisher bekannt gewordenen Arten von Flüssigkristallanzeigeelementen verwendet werden können.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben. Es bedeuten ferner: K: Kristallin-fester Zustand, S: smektische Phase (der Index kennzeichnet den Phasentyp), N: nematischer Zustand, Ch: cholesterische Phase, I: isotrope Phase. Die zwischen zwei Symbolen stehende Zahl gibt

die Umwandlungstemperatur in Grad Celsius an. "Übliche Aufarbeitung" bedeutet: man gibt Wasser hinzu, extrahiert mit Methylenchlorid, trennt ab, trocknet die organische Phase, dampft ein und reinigt das Produkt durch Kristallisation und(oder Chromatographie.

Beispiel 1

Eine flüssigkristalline Phase bestehend aus
7 % p-(5-Heptylpyrimidin-2-yl)-phenyl-(p-pentylbenzylether),
9 % p-(5-Heptylpyrimidin-2-yl)-phenyl-(p-hexylbenzylether),
3 % p-(5-Nonylpyrimidin-2-yl)-phenyl-(p-pentylbenzylether),
5 % p-(5-Nonylpyrimidin-2-yl)-phenyl-(p-heptylbenzylether),
25 % 2-p-Nonyloxyphenyl-5-nonylpyrimidin,
30 % r-1-Cyan-cis-4-(4′-Octyloxybiphenyl-4-yl)-1-butylcyclohexan,
3 % optisch aktives p-[5-Nonylpyrimidin-2-yl)-phenoxymethyl]-benzoesäure-(2-octylester)
12 % optisch aktives R-4-(5-Hexylpyrimidin-2-yl)-phenyl-2-chlorpropionat und
6 % p-[5-Nonylpyrimidin-2-yl)-phenoxymethyl]-trifluortoluol
zeigt K 15° Sc* 83° $S_A$* 87° Ch 98° I, eine spontane Polarisation von 12,4 nC/cm$^2$ und einen Tiltwinkel von 26° bei jeweils 20 °C.

Beispiel 2

Eine flüssigkristalline Phase bestehend aus
7 % p-(5-Heptylpyrimidin-2-yl)-phenyl-(p-pentylbenzylether),
9 % p-(5-Heptylpyrimidin-2-yl)-phenyl-(p-hexylbenzylether),
3 % p-(5-Nonylpyrimidin-2-yl)-phenyl-(p-pentylbenzylether),
5 % p-(5-Nonylpyrimidin-2-yl)-phenyl-(p-heptylbenzylether),
20 % 2-p-Nonyloxyphenyl-5-nonylpyrimidin,
5 % 2-p-Octyloxyphenyl-5-heptylpyrimidin,
15 % r-1-Cyan-cis-4-(4′-octyloxybiphenyl-4-yl)-1-butylcyclohexan,
15 % r-1-Cyan-cis-4-(4′-octylbiphenyl-4-yl)-1-pentylcyclohexan,
3 % optisch aktives p-[5-Nonylpyrimidin-2-yl)-phenoxymethyl]-benzoesäure-(2-octylester)
12 % optisch aktives R-4-(5-Hexylpyrimidin-2-yl)-phenyl-2-chlorpropionat und
6 % p-[5-Nonylpyrimidin-2-yl)-phenoxymethyl]-trifluortoluol
zeigt K 0° Sc* 72° $S_A$* 83° Ch 92° I und eine spontane Polarisation von 10,5 nC/cm$^2$ bei 20 °C.

Beispiel 3

Eine flüssigkristalline Phase bestehend aus
7 % p-(5-Heptylpyrimidin-2-yl)-phenyl-(p-pentylbenzylether),
9 % p-(5-Heptylpyrimidin-2-yl)-phenyl-(p-hexylbenzylether),
3 % p-(5-Nonylpyrimidin-2-yl)-phenyl-(p-pentylbenzylether),
5 % p-(5-Nonylpyrimidin-2-yl)-phenyl-(p-heptylbenzylether),
20 % 2-p-Nonyloxyphenyl-5-nonylpyrimidin,
5 % 2-p-Octyloxyphenyl-5-heptylpyrimidin,
15 % r-1-Cyan-cis-4-(4′-octyloxybiphenyl-4-yl)-1-butylcyclohexan,
15 % r-1-Cyan-cis-4-(4′-heptylbiphenyl-4-yl)-1-hexylcyclohexan,
15 % optisch aktives R-4-(5-Hexylpyrimidin-2-yl)-phenyl-2-chlorpropionat und
6 % p-[5-Nonylpyrimidin-2-yl)-phenoxymethyl]-trifluortoluol
zeigt K 0° Sc* 73° $S_A$* 78° Ch 92° I, eine spontane Polarisation von 12,3 nC/cm$^2$ und einen Tiltwinkel von 30° jeweils bei 20 °C.

Beispiel 4

Eine Lösung von 1,9 g 1-[trans-4-(trans-4-Propylcyclohexyl)-cyclohexyl]-2-(p-trifluortolyl)-ethen (erhältlich durch Heck-Kopplung von trans-4-(trans-4-Propylcyclohexyl)-1-vinylcyclohexan mit p-Bromtrifluortoluol) in 50 ml Tetrahydrofuran wird an 1 g Pd/C (5 %) bei Raumtemperatur hydriert. Nach üblicher Aufarbeitung erhält man 1-[trans-4-(trans-4-Propylcyclohexyl)-cyclohexyl]-2-(p-trifluortolyl)-ethan, F. 50°, K. 117°.

Analog werden hergestellt:

1-[trans-4-(trans-4-Ethylcyclohexyl)-cyclohexyl]-2-(p-trifluortolyl)ethan
1-[trans-4-(trans-4-Butylcyclohexyl)-cyclohexyl]-2-(p-trifluortolyl)ethan
1-[trans-4-(trans-4-Pentylcyclohexyl)-cyclohexyl]-2-(p-trifluortolyl)ethan
1-[trans-4-(trans-4-Hexylcyclohexyl)-cyclohexyl]-2-(p-trifluortolyl)ethan
1-[trans-4-(trans-4-Heptylcyclohexyl)-cyclohexyl]-2-(p-trifluortolyl)ethan

Beispiel 5

Zu einer aus 115 g p-Bromtrifluortoluol und 13 g Magnesiumspänen in 400 ml Diethylether bereiteten Grignard-Lösung wird unter Rühren und Kühlen im Lauf einer Stunde eine Lösung von 65 g 4-n-Pentylcyclohexanon in 200 ml Diethylether getropft. Das Reaktionsgemisch wird noch eine Stunde zum Sieden erhitzt und dann in eine Lösung von 50 ml konzentrierter Salzsäure in 1 l Eiswasser gegossen. Die Etherphase wird abgetrennt und die wäßrige Phase noch zweimal mit je 100 ml Diethylether ausgeschüttelt. Die vereinigten Etherphasen werden mit 5%iger wäßriger Natriumhydrogencarbonatlösung neutral gewaschen, über Natriumsulfat getrocknet und eingedampft. Der Rückstand wird einer Trennung über eine mit Kieselgel gefüllten Säule unterzogen. Das mit Petroläther (Siedebereich 40-60°) eluierte 4-n-Pentyl-cyclohexanol wird in 1 l Ethanol gelöst und in Gegenwart von 75 g feuchtem Raney-Nickel bei Raumtemperatur und Normaldruck 72 Stunden hydriert. Nach Abfiltrieren des Katalysators und Abdestillieren des Ethanols wird der Rückstand wie üblich aufgearbeitet und chromatographisch aufgereinigt. Man erhält p(trans-4-n-Pentylcyclohexyl)-trifluortoluol, F. 10°, K.-60°.

Analog werden hergestellt:

p-(trans-4-[2-(trans-4-Ethylcyclohexyl)-ethyl]-cyclohexyl)-trifluotoluol
p-(trans-4-[2-(trans-4-Propylcyclohexyl)-ethyl]-cyclohexyl)-trifluotoluol
p-(trans-4-[2-(trans-4-Butylcyclohexyl)-ethyl]-cyclohexyl)-trifluotoluol
p-(trans-4-[2-(trans-4-Pentylcyclohexyl)-ethyl]-cyclohexyl)-trifluotoluol
p-(trans-4-[2-(trans-4-Hexylcyclohexyl)-ethyl]-cyclohexyl)-trifluotoluol
p-(trans-4-[2-(trans-4-Heptylcyclohexyl)-ethyl]-cyclohexyl)-trifluotoluol

Beispiel 6

Zu einer siedender Lösung von 16,2 g p-Trifluormethylphenol und 10 ml Pyridin in 120 ml Toluol wird im Lauf von zwei Stunden unter Rühren eine Lösung von 29,3 g trans-4-(trans-4-n-Pentylcyclohexyl)-cyclohexancarbonsäurechlorid in 120 ml Toluol zugetropft. Das Reaktionsgemisch wird weitere 3 Stunden unter Rückfluß gekocht und dann eingedampft. Der Rückstand wird wie üblich aufgearbeitet. Man erhält trans-4-(trans-4-n-Pentylcyclohexyl)-cyclohexancarbonsäure-p-trifluormethylphenylester.

Analog werden hergestellt:

trans-4-(trans-4-Ethylcyclohexyl)-cyclohexancarbonsaüre-p-trifluormethylphenylester
trans-4-(trans-4-Propylcyclohexyl)-cyclohexancarbonsaüre-p-trifluormethylphenylester
trans-4-(trans-4-Butylcyclohexyl)-cyclohexancarbonsaüre-p-trifluormethylphenylester
trans-4-(trans-4-Hexylcyclohexyl)-cyclohexancarbonsaüre-p-trifluormethylphenylester
trans-4-(trans-4-Heptylcyclohexyl)-cyclohexancarbonsaüre-p-trifluormethylphenylester

Beispiel 7

Man stellt eine nematische flüssigkristalline Phase her bestehend aus

30 % 1-[trans-4-(trans-4-Propylcyclohexyl)-cyclohexyl]-2-(p-trifluortolyl)-ethan
12 % trans-1-p-Methoxyphenyl-4-propylcyclohexan
12 % trans-1-p-Ethoxyphenyl-4-propylcyclohexan
10 % trans-1-p-Butoxyphenyl-4-propylcyclohexan
10 % 4-Ethyl-4′-(trans-4-propylcyclohexyl)-biphenyl
10 % 4-Ethyl-4′-(trans-4-pentylcyclohexyl)-biphenyl
5 % 4,4′-Bis-(trans-4-propylcyclohexyl)-biphenyl,
5 % 4,4′-Bis-(trans-4-pentylcyclohexyl)-biphenyl und
6 % 4-(trans-4-Pentylcyclohexyl)-4′-(trans-4-propylcyclohexyl)-biphenyl.

Beispiel 8

Eine nematische flüssigkristalline Phase bestehend aus

15 % trans-1-p-Methoxyphenyl-4-propylcyclohexan
15 % trans-1-(trans-4-Propylcyclohexyl)-4-methoxycyclohexan
10 % trans-1-(trans-4-Propylcyclohexyl)-4-propoxycyclohexan
10 % trans-1-(trans-4-Pentylcyclohexyl)-4-methoxycyclohexan
10 % trans-1-(trans-4-Pentylcyclohexyl)-4-ethoxycyclohexan
10 % trans-4-(trans-4-Propylcyclohexyl)-cyclohexancarbonsäure-p-trifluormethylphenylester
10 % trans-4-(trans-4-Butylcyclohexyl)-cyclohexancarbonsäure-p-trifluormethylphenylester
10 % trans-4-(trans-4-Pentylcyclohexyl)-cyclohexancarbonsäure-p-trifluormethylphenylester und
10 % trans-4-(trans-4-Heptylcyclohexyl)-cyclohexancarbonsäure-p-trifluormethylphenylester
zeigt einen Klärpunkt von 72°, eine optische Anisotropie von 0,086 und eine Viskosität von 18 mPa.s bei 20°.

Beispiel 9

Eine ferroelektrische flüssigkristalline Phase bestehend aus
7 % p-(5-Heptylpyrimidin-2-yl)-phenyl-(p-pentylbenzylether),
9 % p-(5-Heptylpyrimidin-2-yl)-phenyl-(p-hexylbenzylether),
3 % p-(5-Nonylpyrimidin-2-yl)-phenyl-(p-pentylbenzylether),
5 % p-(5-Nonylpyrimidin-2-yl)-phenyl-(p-heptylbenzylether),
28 % 2-p-Nonyloxyphenyl-5-nonylpyrimidin,
30 % r-1-Cyan-cis-4-(4'-Octyloxybiphenyl-4-yl)-1-butylcyclohexan,
3 % optisch aktives p-[5-Nonylpyrimidin-2-yl)-phenoxymethyl]-benzoesäure-(2-octylester)
12 % optisch aktives R-4-(5-Hexylpyrimidin-2-yl)-phenyl-2-chlorpropionat und
3 % p-(trans-4-n-Pentylcyclohexyl)-trifluortoluol
zeigt eine breite $S_A$-Phase.

**Patentansprüche**

1. Verwendung von Trifluortoluolderivaten der Formel I,

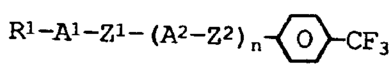

worin

$R^1$ Alkyl mit 1 bis 12 C-Atomen, worin auch eine oder mehrere nicht benachbarte $CH_2$-Gruppen durch -O-, -CO-, -O-CO-, -CO-O-, -O-CO-O-, -CH-Halogen-, -CH-CN- und/oder -CH=CH- ersetzt sein können,

$A^1$ und $A^2$ jeweils unabhängig voneinander unsubstituiertes oder ein- oder mehrfach durch Halogen, Nitril und/oder $CH_3$ substituiertes 1,4-Phenylen, worin auch eine oder mehrere CH-Gruppen durch N ersetzt sein können, trans-1,4-Cyclohexylen, worin auch eine oder zwei nicht benachbarte CH2-Gruppen durch -O- und/oder -S- ersetzt sein können, oder 1,4-Bicyclo(2,2,2)-octylen,

$Z^1$ und $Z^2$ jeweils unabhängig voneinander -CO-O-, -O- CO-, $-CH_2O-$, $-OCH_2-$, $-CH_2CH_2-$ oder eine Einfachbindung und

n 0 oder 1

bedeutet, als Komponenten chiral getilteter smektischer Phasen.

2. Trifluortoluolderivate der Formel I nach Anspruch 1, dadurch gekennzeichnet, daß sie der Formel II entsprechen,

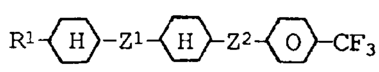 II

worin

$R^1$ Alkyl mit 1 bis 12 C-Atomen, worin auch eine oder mehrere nicht benachbarte $CH_2$-Gruppen durch -O-, -CO-, -O-CO-, -CO-O-, -O-CO-O-, -CH-Halogen-, -CH-CN- und/oder -CH=CH- ersetzt sein können

$Z^1$ und $Z^2$ jeweils unabhängig voneinander -CO-O-, -O- CO-, $-CH_2O-$, $-OCH_2-$ oder $-CH_2CH_2-$, eine der Gruppen $Z^1$ und $Z^2$ auch eine Einfachbindung

bedeutet, mit der Maßgabe, daß im Falle $Z^1$ = Einfachbindung, $Z^2$ -CO-O-, $-CH_2O-$, $-OCH_2-$ oder $-CH_2CH_2-$

bedeutet.

3. Trifluortoluolderivate nach Anspruch 4, dadurch gekennzeichnet, daß sie den Teilformeln IIb, IIc oder IIf entsprechen:

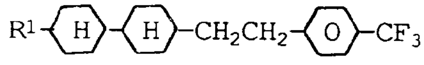

IIb

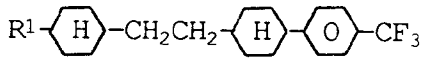

IIc

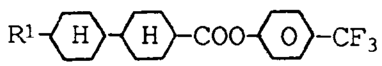

IIf

4. Trifluortoluolderivate der Formel II nach Anspruch 2 dadurch gekennzeichnet, daß eine der Gruppen $Z^1$ und $Z^2$ $CH_2CH_2$ und die andere eine Einfachbindung bedeutet.

5. Trifluortoluolderivate nach Anspruch 3 der Teilformeln IIb oder IIc, dadurch gekennzeichnet, daß $R^1$ geradkettiges Alkyl mit 2 bis 7 C-Atomen bedeutet.

6. Chirale getiltete smektische Phase mit mindestens zwei flüssigkristallinen Komponenten, dadurch gekennzeichnet, daß sie mindestens ein Trifluortoluolderivat der Formel I nach Anspruch 1 enthält.

7. Nematische flüssigkristalline Phase bestehend aus 2 bis 15 Komponenten, dadurch gekennzeichnet, daß mindestens eine Komponente eine Verbindung der Formel II ist.

8. Elektrooptisches Anzeigeelement, dadurch gekennzeichnet, daß es als Dielektrikum eine Phase nach Anspruch 6 oder 7 enthält.

## Claims

1. Use of trifluorotoluene derivatives of the formula I

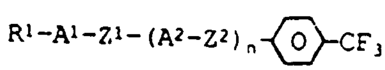

in which

$R^1$ is alkyl having 1 to 12 carbon atoms in which, in addition, one or more non-neighbouring $CH_2$ groups may be replaced by -O-, -CO-, -O-CO-, -CO-O-, -O-CO-O-, -CH-halogen, -CH-CN- and/or -CH=CH-,

$A^1$ and $A^2$, in each case independently of one another, are 1,4-phenylene in which, in addition, one or more CH groups may be replaced by N, trans-1,4-cyclohexylene in which, in addition, one or more non-neighbouring $CH_2$ groups may be replaced by -O- and/or -S-, or 1,4-bicyclo(2,2,2)octylene, each of which is unsubstituted or monosubstituted or polysubstituted by halogen, nitrile and/or $CH_3$,

$Z^1$ and $Z^2$, in each case independently of one another, are -CO-O-, -O-CO-, $-CH_2O-$, $-OCH_2-$, $-CH_2CH_2-$ or a single bond, and

n is 0 or 1,

as components of chirally (sic) tilted smectic phases.

2. Trifluorotoluene derivatives of the formula I according to Claim 1, characterised in that they correspond to the formula II

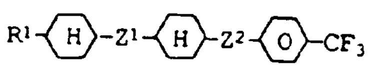

II

in which

$R^1$ is alkyl having 1 to 12 carbon atoms in which, in addition, one or more non-neighbouring $CH_2$ groups may be replaced by -O-, -CO-, -O-CO-, -CO-O-, -O-CO-O-, -CH- halogen, -CH-CN- and/or -CH=CH-,

$Z^1$ and $Z^2$, in each case independently of one another, are -CO-O-, -O-CO-, $-CH_2O-$, $-OCH_2-$ or $-CH_2CH_2-$,

and one of the $Z^1$ and $Z^2$ groups is also a single bond, with the proviso that in the case where $Z^1$ = single bond, $Z^2$ is -CO-O-, $-CH_2O-$, $-OCH_2-$ or $-CH_2CH_2-$.

3. Trifluorotoluene derivatives according to Claim 4 [sic], characterised in that they correspond to the subformulae IIb, IIc or IIf:

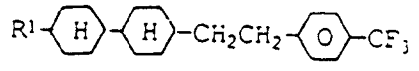

IIb

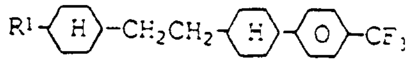

IIc

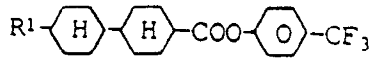

IIf

4. Trifluorotoluene derivatives of the formula II according to Claim 2, characterised in that one of the groups $Z^1$ and $Z^2$ is $CH_2CH_2$ and the other is a single bond.

5. Trifluorotoluene derivatives according to Claim 3 of the subformulae IIb or IIc, characterised in that $R^1$ is straight-chain alkyl having 2 to 7 carbon atoms.

6. Chiral tilted smectic phase having at least two liquid-crystalline components, characterised in that it contains at least one trifluorotoluene derivative of the formula I according to Claim 1.

7. Nematic liquid-crystalline phase comprising 2 to 15 components, characterised in that at least one component is a compound of the formula II.

8. Electrooptical display element, characterised in that it contains, as dielectric, a phase according to Claim 6 or 7.

## Revendications

1. Utilisation de dérivés de trifluorotoluène de formule I,

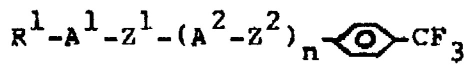

dans laquelle

$R^1$ est un groupe alkyle ayant 1 à 12 atomes de carbone, où également un ou plusieurs groupes $CH_2$ non contigus peuvent être remplacés par -O-, -CO-, -O-CO-, -CO-O-, -O-CO-O-, -CH-halogène, -CH-CN- et/ou -CH=CH-,

$A^1$ et $A^2$ représentent, chacun indépendamment l'un de l'autre, un groupe 1,4-phénylène non substitué ou mono- ou polysubstitué par un radical halogène, nitrile et/ou $CH_3$, où également un ou plusieurs groupes CH peuvent être remplacés par N, un groupe trans-1,4-cyclohexylène, où également un ou deux groupes $CH_2$ non contigus peuvent être remplacés par -O- et/ou -S-, ou un groupe 1,4-bicyclo(2,2,2)-octylène,

$Z^1$ et $Z^2$ représentent, chacun indépendamment l'un de l'autre, -CO-O-, -O-CO-, $-CH_2O-$, $-OCH_2-$, $-CH_2CH_2-$ ou une simple liaison, et

n est 0 ou 1,

comme composants de phases smectiques de formation chirale.

2. Derivés de trifluorotoluène selon la revendication 1, caractérisés en ce qu'ils répondent à la formule II

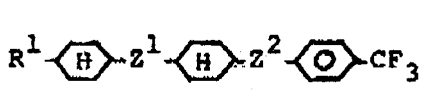

II

dans laquelle

$R^1$ est un groupe alkyle ayant 1 à 12 atomes de carbone, où également un ou plusieurs groupes $CH_2$ non contigus peuvent être remplacés par -O-, -CO-, -O-CO-, -CO-O-, -O-CO-O-, -CH-halogène-, -CH-CN- et/ou -CH=CH-,

$Z^1$ et $Z^2$ représentent, chacun indépendamment l'un de l'autre, -CO-O-, -O-CO-, $-CH_2O-$, $-OCH_2-$ ou $-CH_2CH_2-$, un des groupes $Z^1$ et $Z^2$ pouvant également être une simple liaison, avec pour condition que lorsque $Z^1$ = simple liaison, $Z^2$ représente -CO-O-, $-CH_2O-$, $-OCH_2-$ ou $-CH_2CH_2-$.

3. Dérivés de trifluorotoluène selon la revendication 4, caractérisés en ce qu'il répondent aux formules partielles IIb, IIc ou IIf:

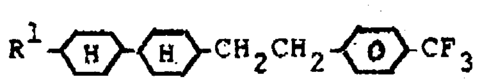 IIb

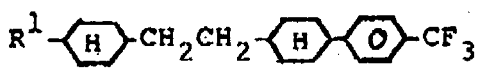 IIc

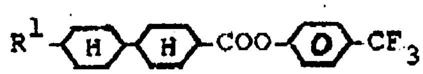 IIf

4. Dérivés de trifluorotoluène de formule II selon la revendication 2, caractéirsés en ce qu'un des groupes $Z^1$ et $Z^2$ représente $CH_2CH_2$ et l'autre désigne une simple liaison.

5. Dérivés de trifluorotoluène selon la revendication 3 de formules partielles IIb ou IIc, caractérisés en ce que $R^1$ représente un groupe alkyle linéaire ayant 2 à 7 atomes de carbone.

6. Phase smectique de formation chirale ayant au moins deux composants en cristaux liquides, caractérisée en ce qu'elle contient au moins un dérivé de trifluorotoluène de formule I selon la revendication 1.

7. Phase de cristaux liquides nématique comprenant 2 à 15 composants, caractérisée en ce qu'au moins un composant est un composé de formule II.

8. élément d'affichage électro-optique, caractérisé en ce qu'il contient comme diélectrique une phase selon l'une des revendications 6 ou 7.